# EUROPÄISCHE PATENTSCHRIFT

(11) **EP 2 594 338 B1**
(45) Veröffentlichungstag und Bekanntmachung des Hinweises auf die Patenterteilung: **03.08.2016**
(21) Anmeldenummer: 12007811.8
(22) Anmeldetag: 19.11.2012
(51) Int. Cl.: B05D 1/32, C09D 5/00

(54) **Bestandteil einer Oberflächenbeschichtungsanlage**
Component of a surface coating system
Composant d'une installation de revêtement de surface

(30) Priorität: 18.11.2011 DE 102011118868; 10.01.2012 DE 102012000288
(43) Veröffentlichungstag der Anmeldung: 22.05.2013
(73) Patentinhaber: Mayer, Thomas, 88499 Altheim (DE)
(72) Erfinder: Mayer, Thomas, 88499 Altheim (DE)
(74) Vertreter: Otten, Roth, Dobler & Partner mbB Patentanwälte

(56) Entgegenhaltungen:
- EP-A1- 1 099 482
- WO-A1-2010/057323
- DE-U1- 8 624 980
- DE-U1-202009 008 205
- US-A- 5 698 264

## Beschreibung

"Bestandteil einer Oberflächenbeschichtungsanlage"

Die Erfindung betrifft einen Bestandteil einer Oberflächenbeschichtungsanlage sowie ein Verfahren zur Herstellung einer Opferschicht bzw. zur Reinigung eines Bestandteiles nach dem Oberbegriff des Patentanspruchs 1, 7 und 10.

### Stand der Technik

Oberflächenbeschichtungsanlagen, insbesondere Lackieranlagen oder Pulverbeschichtungsanlagen weisen eine Vielzahl von unterschiedlichen Bestandteilen auf, die von dem jeweils verwendeten Beschichtungsmaterial verschmutzt werden können.

Beispielsweise wird ein als Gitterrost oder Lochraster ausgebildeter Bestandteil zur Be- und Entlüftung einer Lackierkabine in einer Lackieranlage in oder über einer Wand-, Decken- und/oder Bodenöffnung in einer Lackieranlage angeordnet.

Im täglichen Einsatz eines derartigen Gitterrostes oder Lochrasters in einer Lackierkabine wird dieser durch Farbpartikel während eines Lackiervorgangs verschmutzt, insbesondere wenn der Gitterrost oder das Lochraster vor einer Entlüftungsöffnung zur Absaugung der mit Farbpartikeln kontaminierten Luft angeordnet ist. Dabei setzen sich die Farbpartikel auf der Oberfläche des Gitterrostes oder des Lochrasters ab und bilden eine kontinuierlich wachsende Schicht von Farbpartikeln, wodurch die Absaugleistung ab einem gewissen Grad an Verschmutzung vermindert werden kann. Auch die Arbeitsumgebung und die Arbeitsergebnisse einer Lackierarbeit sind von einem gewissen Sauberkeitsgrad der Anlage beeinflusst. Aus diesem Grunde ist die regelmäßig durchzuführende Reinigung von Bestandteilen einer Oberflächenbeschichtungsanlage, insbesondere derartiger Gitterroste oder Lochraster für einen störungsfreien Betrieb in einer Lackieranlage unerlässlich.

Herkömmliche Reinigungsverfahren, welche chemisch, thermisch oder durch Hochdruck-Wasserstrahlen erfolgen, belasten die Umwelt oftmals erheblich und sind in der Regel nicht vor Ort durchzuführen. Insbesondere die Reinigung an einem anderen Ort, wie in oder im Umgebungsbereich der Lackieranlage macht es notwendig, einen zusätzlichen Satz von nicht verschmutzten Bestandteilen, wie zum Beispiel Gitterroste vorzuhalten, damit die Anlage trotz einer Reinigung von verschmutzten Bestandteilen weiter betrieben werden kann. Dies bringt zusätzliche Investitionen und Lagerbedürfnisse mit sich.

Die Druckschrift DE 20 2005 005 698 U1 zeigt eine Komponente für eine Lackiereinrichtung, beispielsweise Gitterroste, Gehänge und Abdeckungen, wobei die Komponente eine plasmapolymere Beschichtung aufweist, deren Rauwert der Oberfläche vorzugsweise < 0,3 µm beträgt. Dadurch soll die Haftung von Farbpartikeln stark vermindert werden. Ein derartiger mit Farbpartikeln verschmutzter Gitterrost wird mittels eines rotierenden Wasserhochdruckstrahls im Mitteldruckbereich gereinigt, wobei die plasmapolymere Beschichtung aufgrund des geringen Rauwertes der Oberfläche vorrangig ein Anhaften von Farbpartikeln auf der Oberfläche vermeiden soll, so dass diese gut abgewaschen werden können.

Nachteilig bei dieser Ausführungsform eines Bestandteiles für eine Lackiereinrichtung ist der technisch hohe Aufwand zur Herstellung einer Beschichtung mit einer niedrigen Oberflächenrauheit sowie der kostenaufwendigen Reinigung.

Darüber hinaus ist die Herstellung einer derartigen Beschichtung, welche vorrangig auf eine möglichst geringe Verschmutzungsneigung ausgerichtet ist, kostenaufwendig im Vergleich mit den Herstellkosten eines herkömmlichen Bestandteiles einer Oberflächenbeschichtungsanlage. Des Weiteren sind diese Oberflächen empfindlich.

Der Stand der Technik US 5 698 264 A beschreibt einen Maskierungsfilm für die Verwendung im Air-Brush Malverfahren. Dabei wird ein Film als Maske auf ein Objekt aufgetragen, der das zu bemalende Objekt an definierten Stellen vom Farbauftrag schützt und später entfernt werden kann, um scharfe Konturen zu ermöglichen. Nach jedem Entfernen eines Maskierungsfilms ist ein neuer Film aufzutragen, um neue Konturen zu definieren.

Der Stand der Technik WO 2010 057 232 A1 beschreibt ein Vorbehandlungsverfahren für Nebenflächen in Beschichtungsanlagen, nämlich Vakuumbeschichtungsanlagen, vor dem Beschichten. Dabei wird über eine Vorbeschichtung erreicht, dass die Haftung eines Beschichtungsmaterials auf Nebenflächen herabgesetzt wird. Die beschriebene Opferschicht lass dabei nur einen Reinigungsvorgang zu, da sie nach einem erfolgten Prozess durch einfaches Absaugen und/oder Abwischen im Wesentlichen vollständig entfernt werden soll. Die betreffenden Nebenflächen müssen sodann vor dem nächsten Beschichtungsprozess mit einer neuen Opferschicht überzogen werden.

Derartige Opferschichten erhöhen jedoch die Kosten eines Vorgangs, da sie jedesmal einen weiteren Handlungsschritt erforderlich machen.

Aufgabe der Erfindung ist es demnach, ein Bestandteil einer Oberflächenbeschichtungsanlage mit einer Beschichtung derart weiterzubilden, dass eine kostengünstige Herstellung und Reinigung eines Bestandteiles mit einer Beschichtung ermöglicht wird.

Diese Aufgabe wird durch die Merkmale der Ansprüche gelöst.

Vorteilhafte Weiterbildungen sowie zweckmäßige Ausgestaltungen sind durch die abhängigen Ansprüche möglich.

### Beschreibung der Erfindung

Die Erfindung umfasst einen Bestandteil einer Oberflächenbeschichtungsanlage, insbesondere einer Lackieranlage oder einer Pulverbeschichtungsanlage, wobei der Bestandteil selbst eine Beschichtung aufweist, auf deren Oberfläche sich im Betrieb der Lackieranlage ungehindert Farbpartikel absetzen.
Im Sinne der Erfindung ist unter einem Bestandteil ein Bauteil oder Gegenstand zu verstehen, beispielsweise ein Gitterrost für eine Lackieranlage, welches zur Abdeckung einer Wand-, Decken- oder Bodenöffnung verwendet wird.
Ein ungehindertes Absetzen von Farbpartikeln auf der erfindungsgemäßen Beschichtung eines Bestandteiles, beispielsweise auf einem Gitterrost erfolgt ohne einschränkende Maßnahmen, wie zum Beispiel durch vorgeschaltete Filter oder durch Ableitung aufgrund elektrostatischer Aufladung.

Kern der Erfindung ist, dass die Beschichtung als Opferschicht ausgebildet ist, welche von dem Bestandteil gemeinsam mit den Farbpartikeln derart lagenweise lösbar ist, dass mehrere Lagen nacheinander abgelöst werden können, ohne dass zwischendurch eine Neubeschichtung erfolgen muss.

Im Sinne der Erfindung ist eine Opferschicht eine Schicht zum Schutz eines darunter angeordneten Materials vor Kontamination durch eigene Auflösung der Opferschicht zu verstehen.

Aufgrund der Opferschicht, welche sich lagenweise gemeinsam mit den Farbpartikeln von einem Bestandteil löst, in dem ein unbestimmter Schichtanteil von der kontaminierten Oberfläche der Gesamtschicht abgelöst bzw. abgetragen wird, kann eine kostengünstige Ausführungsform eines Bestandteiles mit einer Beschichtung gebildet werden, dessen Reinigung in einfachster Art und Weise durchführbar ist.

Darüber hinaus ist die Opferschicht auf eine einfache und kostengünstige Reinigung eines mit Farbpartikeln verschmutzten Bestandteiles gerichtet, unabhängig vom Grad der Verschmutzung.

Weiterhin kann die Lebensdauer eines erfindungsgemäßen Bestandteiles gegenüber einem aus dem Stand der Technik bekannten Bestandteiles erhöht werden, da beispielsweise ein Bestandteil mit einer plasmapolymeren Beschichtung bei einer eventuellen Beschädigung der Oberfläche lediglich einen verminderten Schutz gegen eine Verschmutzung durch Farbpartikel darstellt. Die erfindungsgemäße Opferschicht kann einfach erneuert und sodann wieder abgetragen werden.

In einer bevorzugten Ausgestaltung der Erfindung ist der Bestandteil als ortsfester Bestandteil einer Oberflächenreinigungsanlage ausgebildet, insbesondere als Wand-, Decken- und/oder Bodenplatte, als Lauf- und Fahrweg, als Lampenabdeckung, als Fördervorrichtung, als Luftzufuhr- und/oder -abfuhrkanal, als Hub- bzw. Senkeinrichtung, als Lackierroboter, als Gerüst, als Gitterrost oder Lochraster zur Anordnung über einer Wand-, Decken- und/oder Bodenöffnung in einer Lackieranlage und/oder als Applikationsvorrichtung bzw. Antriebsvorrichtung oder dergleichen.
Ein ortsfester bzw. unbeweglicher Bestandteil einer Oberflächenbeschichtungsanlage kann im Sinne der Erfindung nicht ohne Weiteres demontiert werden, jedoch dazu vorgesehen ist.
Aufgrund des erfindungsgemäßen Bestandteiles kann eine Reinigung von ortsfesten Bestandteilen einer Oberflächenbeschichtungsanlage ohne vorherige Demontage des Bestandteiles ausgeführt werden.

Darüber hinaus ist es in einer überdies bevorzugten Weiterbildung der Erfindung vorgesehen, dass der Bestandteil als mobiler bzw. als beweglicher Bestandteil im Betrieb der Oberflächenbeschichtungsanlage ausgebildet ist, insbesondere als Lackierhaken, als Gehäuse, als Schutzhülle, als Fahr- bzw. Hordenwagen und/oder als Stütz- bzw. Fahrgerüst oder dergleichen.
Ein mobiler bzw. beweglicher Bestandteil umfasst im Sinne der Erfindung alles, was im Betrieb oder zu Wartungszwecken beweglich/entfernbar ist, auch zur Reinigung und Aufbereitung. Vorteil eines beweglichen Bestandteiles ist, dass dieser in einfachster Art und Weise auszutauschen ist. Dies verkürzt die Stillstandzeiten einer Anlage während des Reinigungsvorgangs eines verschmutzten Bestandteils.

In einer bevorzugten Weiterbildung der Erfindung erfolgt ein lageweises Lösen der Opferschicht mittels Abschaben, Abkratzen, Abklopfen und/oder Bürsten.

Aufgrund der porösen Zusammensetzung der Opferschicht wird ein lageweises Lösen eines Schichtanteils der Opferschicht durch ein mechanisches Abtragen ermöglicht, wobei alle mechanischen Verfahren zur Abtragung bzw. zum Lösen eines Schichtanteils der Opferschicht eingesetzt werden können.

Die erfindungsgemäße Opferschicht kann in einer Ausführungsform aus einem Gemisch aus Kalk und einer auf Wasser basierenden Flüssigkeit (insbesondere lediglich Wasser) aufgebaut werden.

In einer darüber hinaus bevorzugten Ausgestaltung der Erfindung umfasst die Opferschicht ein Gemisch aus Kalk, eine auf Wasser basierende Flüssigkeit und ein Bindemittel, vorzugsweise ein Haftvermittler auf Kunstharzbasis.

Die Gemischzusammensetzung aus den vorgenannten Stoffen hat den Vorteil, dass nach dem Ablösen eines mit Farbpartikeln kontaminierten Schichtanteils der Opferschicht dieser in einfachster Weise umweltschonend entsorgt werden kann, indem der abgelöste Schichtanteil der Opferschicht durch Zugabe größerer Mengen einer auf Wasser basierenden Flüssigkeit in ihre Bestandteile aufgelöst werden kann. Aufgrund dieser Auflösung des abgelösten Schichtanteils können die Farbpartikel vom Schichtanteil getrennt werden und entsprechend entsorgt werden.

Darüber hinaus ist es in einer weiteren Ausgestaltung der Erfindung vorgesehen, dass die Opferschicht spröde Eigenschaften und/oder eine homogene innere Struktur aufweist. aufweist. Unter spröden Eigenschaften ist im Sinne der Erfindung eine Opferschicht zu verstehen, welche leicht zerreibbar ist und in Partikel-/Pulverform zerfällt. Diese spröde Eigenschaft der Opferschicht ermöglicht ein lageweises Lösen eines mit Farbpartikeln kontaminierten Schichtanteils durch eine mechanische Bearbeitung, beispielsweise durch Bürsten mittels einer Drahtbürste. Aufgrund der homogenen inneren Struktur der Opferschicht wird ein Ablösen eines verschmutzten Schichtanteils von der Beschichtung mittels einer mechanischen Bearbeitung ermöglicht, ohne dass sich die daraus resultierende gereinigte Oberfläche unvorteilhaft verändert.

In einer weiteren Ausgestaltung der Erfindung ist es vorgesehen, dass die Opferschicht als eine gleichmäßige Schicht auf der gesamten Oberfläche der Abdeckvorrichtung gebildet ist. Bei der Herstellung der Beschichtung wird durch ein entsprechendes Herstellungsverfahren die gesamte Oberfläche des Bestandteiles beschichtet, wobei die Beschichtung im Wesentlichen eine einheitliche gleiche Schichtdicke aufweist. Dadurch kann der gesamte Bestandteil vor einer direkten Kontamination der Oberfläche mit Farbpartikeln geschützt werden.

Ein weiterer Aspekt der Erfindung umfasst ein Verfahren zur Herstellung einer Opferschicht für einen Bestandteil einer Oberflächenbeschichtungsanlage, wobei ein Herstellen eines Gemischs zur Ausbildung einer Opferschicht, das Beschichten des Bestandteiles mit dem Gemisch aus einer Lösung und das Trocknen des Gemischs zur Bildung einer Beschichtung mit einem vorzugsweise homogenen Aufbau vom erfindungsgemäßen Verfahren umfasst wird. Der Vorteil des erfindungsgemäßen Verfahrens ist das kostengünstige und einfache Herstellen einer Beschichtung für einen Bestandteil. Darüber hinaus kann die Opferschicht mehrfach wieder neu aufgetragen werden, wenn nach einigen Reinigungszyklen ein nahezu vollständiger Abtrag erfolgt ist.

In einem weiteren, bevorzugten Verfahrensschritt ist vorgesehen, dass die Opferschicht mittels Eintauchen des Bestandteiles in das Gemisch, durch Spritzen des Gemischs und/oder durch Streichen des Gemischs auf den Bestandteil gebildet wird.

Die Bildung einer Opferschicht mittels Eintauchen oder dergleichen des Bestandteiles stellt gegenüber herkömmlichen Beschichtungen von Bestandteilen ein kostengünstiges Verfahren unter Verzicht von aufwendigen Verfahrensschritten oder Apparaturen, beispielsweise Pulverbeschichtungsanlagen, dar. Lediglich ein entsprechendes Tauchbad wird benötigt.

Überdies ist es in einem bevorzugten Verfahrensschritt vorgesehen, dass zwischen der Oberfläche des Bestandteiles und der Opferschicht eine haftvermittelnde Zwischenschicht, insbesondere ein Kunstharzbestandteil aufgetragen wird. Das Auftragen einer haftvermittelnden Zwischenschicht verbessert die Hafteigenschaften zwischen der Opferschicht und des Bestandteiles, beispielsweise wenn die Beschichtung eines Bestandteiles mit einer Oberfläche mit geringer Oberflächenrauheit oder Oberflächenhaftung vorgesehen ist, beispielsweise ein Bestandteil aus einem Kunststoffmaterial. Haftvermittelnde Zwischenschichten sind vorteilhaft, wenn eine selbstständige adhäsive Haftung des Materials der Opferschicht auf dem Material des Bestandteiles nicht oder nur unzureichend erfolgen würde.

Ein weiterer Aspekt der Erfindung sieht ein Verfahren zur Reinigung eines Bestandteiles mit einer Opferschicht einer Oberflächenbeschichtungsanlage, insbesondere einer Lackieranlage oder einer Pulverbeschichtungsanlage vor, wobei das Verfahren die Bereitstellung des mit Farbpartikeln verschmutzten Bestandteiles einer Oberflächenbeschichtungsanlage an einem Reinigungsplatz, die Reinigung des Bestandteiles durch ein lageweises Lösen der als Opferschicht ausgebildeten und mit Farbpartikeln verunreinigten Beschichtung mittels Abschaben, Abkratzen, Abklopfen und/oder Bürsten und die Bereitstellung des gereinigten Bestandteiles in der Oberflächenbeschichtungsanlage umfasst. Durch die Bereitstellung des mit Farbpartikeln verschmutzten Bestandteiles an einem Reinigungsplatz kann eine Reinigung des Bestandteiles im eingebauten Zustand des Bestandteiles in der Oberflächenbeschichtungsanlage als auch an einem externen Ort durchgeführt werden. Zur Reinigung des Bestandteiles an einem externen Ort wird dieser vor der Reinigung demontiert, anschließend gereinigt und nach dem Reinigungsvorgang wieder in der Oberflächenbeschichtungsanlage montiert.

Es ist anzumerken, dass die mit Lack kontaminierten entfernten Bestandteile der Opferschicht staubtrocken vorliegen, so dass sie nach aktueller Verordnungslage eventuell im Hausmüll entsorgt werden können.

Vorteilhaft an der lagenweisen Ablösung der Opferschicht ist insbesondere, dass mehrere Lagen nacheinander abgelöst werden können, ohne dass zwischendurch eine Neubeschichtung erfolgen muss.

Weitere Merkmale der Erfindung gehen aus der nachfolgenden Figurenbeschreibung des Ausführungsbeispiels eines als Abdeckvorrichtung in Form eines Gitterostes in einer Lackieranlage ausgebildeten Bestandteiles und den Zeichnungen hervor.

Dabei zeigen:
- Figur 1: einen Ausschnitt eines Gitterrostes mit einer angedeuteten erfindungsgemäßen Beschichtung in einer perspektivischen Darstellung;
- Figur 2: eine perspektivische Darstellung eines Steges (Längs- oder Quersteg) eines Gitterrostes.

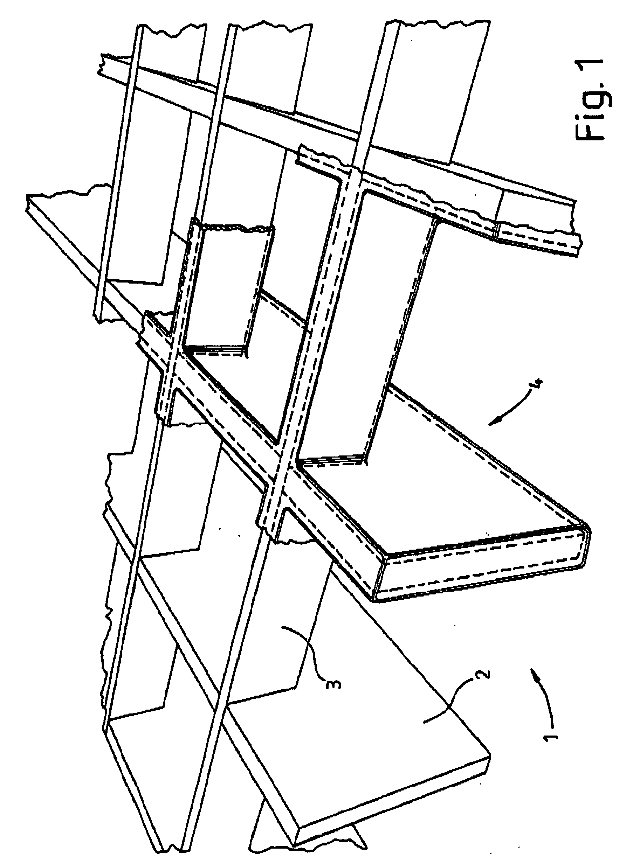

In Figur 1 ist ein Ausschnitt einer Abdeckvorrichtung 1 gezeigt, wobei die Abdeckvorrichtung 1 in Form eines Gitterrostes ausgebildet ist, welcher eine Anordnung von länglichen Profilen in gleichmäßigen Abständen vorsieht.

Die länglichen Teile der Abdeckvorrichtung 1 sind als parallel nebeneinander angeordnete Längsstege 2 und Querstege 3 ausgebildet, wobei die Abdeckvorrichtung 1 in Form eines Gitterrostes durch Einstecken der Längsstege 2 und der Querstege 3 in voneinander beabstandeten Einkerbungen in den Längsstegen 2 und Querstegen 3 gebildet ist.

Es ist denkbar, dass die Längsstege 2 und die Querstege 3 zur Bildung einer Abdeckvorrichtung 1, vorzugsweise an den zur Bodenfläche bzw. Öffnung gerichteten Positionen miteinander verschweißt werden.

Durch Eintauchen der Abdeckvorrichtung 1 in eine Lösung der aufzubringenden Beschichtung wird die Oberfläche der Abdeckvorrichtung gleichmäßig mit einer Beschichtung 4 umhüllt, welche aus einem Gemisch aus Kalk, insbesondere Kalziumcarbonat, eine auf Wasser basierende Flüssigkeit oder lediglich Wasser und ein Bindemittel umfasst.

Die Beschichtung ist in Fig. 1 nur Abschnittsweise dargestellt, umgibt aber in der erfindungsgemäßen Ausführung die gesamte Struktur der Abdeckvorrichtung 1.

Die Beschichtung weist spröde Eigenschaften auf und dient als Opferschicht zum Schutz des darunter angeordneten Materials vor Verschmutzungen.

Eine durch Farbpartikel verschmutzte Beschichtung 4 wird durch mechanische Bearbeitungsverfahren an ihrer Oberfläche, beispielsweise durch Abkratzen, Abklopfen und/oder Bürsten, beispielsweise mittels einer Stahlbürste oder einem Besen gereinigt, indem ein unbestimmter Schichtanteil von der Oberfläche der Beschichtung 4 gelöst wird. Auch das ergänzende oder alleinige Anwenden erheblicher Vibrationen, beispielsweise auf einer Rüttelplatte oder dergleichen, kann das Ablösen der Opferschicht bewirken. Das Ablösen der Verunreinigung erfolgt mitsamt einigen Anteilen der Opferschicht, so dass diese nach einer gewissen Anzahl von Reinigungszyklen wieder erneuert werden muss.

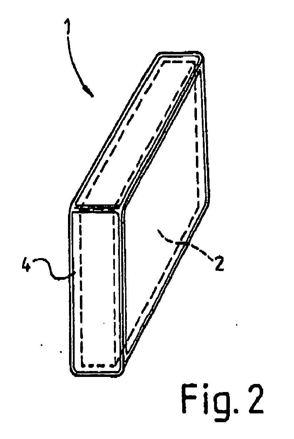

In Figur 2 ist ein Stegabschnitt, hier ein Längssteg 2, einer Abdeckvorrichtung 1 in einer perspektivischen Darstellung gezeigt (gestrichelt), wobei der Längssteg 2 gleichmäßig von einer Beschichtung 4 umhüllt ist.

Die Beschichtung 4 wird vorzugsweise im Tauchverfahren an der Oberfläche der Abdeckvorrichtung 1 aufgebracht, wodurch einerseits eine die Abdeckvorrichtung 1 homogen umgebende Struktur aus der Beschichtung 4 als auch andererseits eine im Wesentlichen gleichmäßige Schichtdicke der Opferschicht erzielt werden kann.

### Bezugszeichenliste:

- 1: Abdeckvorrichtung
- 2: Längssteg
- 3: Quersteg
- 4: Beschichtung

## Patentansprüche

1. Bestandteil einer Oberflächenbeschichtungsanlage, insbesondere einer Lackieranlage oder einer Pulverbeschichtungsanlage, wobei der Bestandteil selbst eine Beschichtung (4) aufweist, auf deren Oberfläche sich im Betrieb der Anlage ungehindert Partikel absetzen, **dadurch gekennzeichnet, dass** die Beschichtung (4) als Opferschicht ausgebildet ist, welche von dem Bestandteil gemeinsam mit den Partikeln derart lagenweise lösbar ist, dass mehrere Lagen nacheinander abgelöst werden können, ohne dass zwischendurch eine Neubeschichtung erfolgen muss, wobei die Opferschicht ein Gemisch aus Kalk, eine auf Wasser basierende Flüssigkeit und einem Bindemittel, vorzugsweise einem Haftvermittler auf Kunstharzbasis umfasst.

2. Bestandteil nach Anspruch 1, **dadurch gekennzeichnet, dass** der Bestandteil als ortsfester Bestandteil einer Oberflächenbeschichtungsanlage ausgebildet ist, insbesondere als Wand-, Decken- und/oder Bodenplatte, als Lauf- und Fahrweg, als Lampenabdeckung, als Fördervorrichtung, als Luftzufuhr- und/oder -abfuhrkanal, als Hub- bzw. Senkeinrichtung, als Lackierroboter, als Gerüst, als Gitterrost oder Lochraster zur Anordnung über einer Wand-, Decken und/oder Bodenöffnung in einer Lackieranlage und/oder als Applikationsvorrichtung bzw. Antriebsvorrichtung oder dergleichen.

3. Bestandteil nach Anspruch 1, **dadurch gekennzeichnet, dass** der Bestandteil als mobiler bzw. als beweglicher Bestandteil im Betrieb der Oberflächenbeschichtungsanlage ausgebildet ist, insbesondere als Lackierhaken, als Gehäuse, als Schutzhülle, als Fahr- bzw. Hordenwagen und/oder als Stütz- bzw. Fahrgerüst oder dergleichen.

4. Bestandteil nach einem der vorhergehenden Ansprüche, **dadurch gekennzeichnet, dass** ein lageweises Lösen der Opferschicht mittels Abschaben, Abkratzen, Abklopfen und/oder Bürsten erfolgt.

5. Bestandteil nach einem der vorhergehenden Ansprüche, **dadurch gekennzeichnet, dass** die Opferschicht spröde Eigenschaften und/oder eine homogene innere Struktur aufweist.

6. Bestandteil nach einem der vorhergehenden Ansprüche, **dadurch gekennzeichnet, dass** die Opferschicht als eine gleichmäßige Schicht auf der gesamten Oberfläche des Bestandteiles gebildet ist.

7. Verfahren zur Herstellung einer Opferschicht für einen Bestandteil einer Oberflächenbeschichtungsanlage nach einem der Ansprüche 1 bis 6, **dadurch gekennzeichnet, dass** das Verfahren nachfolgende Schritte umfasst:
- Herstellen eines Gemischs zur Ausbildung einer Opferschicht;
- Beschichten des Bestandteiles mit dem Gemisch aus einer Lösung;
- Trocknen des Gemischs zur Bildung einer Beschichtung mit einem vorzugsweise homogenen Aufbau.

8. Verfahren nach Anspruch 7, **dadurch gekennzeichnet, dass** die Opferschicht mittels Eintauchen des Bestandteiles in das Gemisch, durch Spritzen des Gemischs und/oder durch Streichen des Gemischs auf den Bestandteil gebildet wird.

9. Verfahren nach einem der Ansprüche 7 bis 8, **dadurch gekennzeichnet, dass** das Gemisch zur Ausbildung einer Opferschicht Kalk, insbesondere Kalziumcarbonat, Wasser und ein Bindemittel umfasst und/oder dass zwischen der Oberfläche des Bestandteiles und der Opferschicht eine haftvermittelnde Zwischenschicht, insbesondere ein Kunstharzbestandteil aufgetragen wird.

10. Verfahren zur Reinigung eines Bestandteiles mit einer Opferschicht einer Oberflächenbeschichtungsanlage, insbesondere einer Lackieranlage oder einer Pulverbeschichtungsanlage nach einem der Ansprüche 1 bis 6, **dadurch gekennzeichnet, dass** das Verfahren nachfolgende Schritte umfasst:
- Bereitstellung des mit Farbpartikeln verschmutzten Bestandteiles einer Oberflächenbeschichtungsanlage an einem Reinigungsplatz;
- Reinigung des Bestandteiles durch ein lageweises Lösen der als Opferschicht ausgebildeten und mit Farbpartikeln verunreinigten Beschichtung mittels Abschaben, Abkratzen, Abklopfen und/oder Bürsten;
- Bereitstellung des gereinigten Bestandteiles in der Oberflächenbeschichtungsanlage.

## Claims

1. Component of a surface coating plant, in particular a painting plant or powder coating plant, wherein the component itself has a coating (4) upon whose surface particles are freely deposited during operation of the plant,
**characterized in that**
the coating (4) is formed as the sacrificial layer, which may be detached in layers from the component together with the particles, wherein several layers may be peeled off one by one without a new coating being required in between, and wherein the sacrificial layer comprises a mixture of lime, a water-based liquid and a binding agent, preferably an adhesion promoter on a resin base.

2. Component according to claim 1,
**characterized in that**
the component is designed as a stationary component of a surface coating plant, in particular a side, upper and/or bottom plate, as a running and guide path, as a lamp cover, as a conveying device, as an air supply and/or discharge channel, as a lifting or lowering device, as a painting robot, as a framework, as a grid or perforated grid to be placed over a wall, ceiling and/or floor opening in a painting plant and/or as an application device or drive device or the like.

3. Component according to claim 1,
**characterized in that**
the component is designed as a mobile or movable element in the operation of the surface coating system, in particular as a painting hook, as a housing, as a protective cover, as a vehicle or trolley and/or as a support, mobile framework or the like.

4. Component according to one of the preceding claims,
**characterized in that**
a layered release of the sacrificial layer by means of scraping, scratching, tapping and/or brushing takes place.

5. Component according to one of the preceding claims,
**characterized in that**
the sacrificial layer possess brittle properties and/or a homogeneous inner structure.

6. Component according to one of the preceding claims,
**characterized in that**
the sacrificial layer is formed as a uniform layer over the entire surface of the component.

7. Method for the production of a sacrificial layer for a component of a surface coating plant according to one of the claims 1 to 6,
**characterized in that**
the method comprises the steps of:
- preparing a mixture to form a sacrificial layer;
- coating of the component with the mixture of a solution;
- drying the mixture to form a coating with a preferably homogeneous structure.

8. Method according to claim 7,
**characterized in that**
the sacrificial layer is formed by immersion of the component in the mixture, by spraying the mixture and/or by brushing the mixture onto the component.

9. Method according to one of the claims 7 to 8,
**characterized in that**
the mixture for forming a sacrificial layer comprises lime, in particular calcium carbonate, water and a binding agent and/or wherein an adhesion-promoting intermediate layer, in particular a synthetic resin component, is applied between the surface of the component and the sacrificial layer.

10. Method for the production of a sacrificial layer for cleaning a component in a surface coating plant, painting plant or a powder coating plant according to one of the claims 1 to 6,
**characterized in that**
the method comprises the following steps:
- preparation of a component contaminated with paint particles in a cleaning area of a surface coating plant;
- cleaning of the component by layered removal of the coating in the form of a sacrificial layer and contaminated with paint particles, by scraping, scratching, tapping and/or brushing;
- provision of the cleaned component in the surface coating plant.

## Revendications

1. Composant d'une installation de revêtement de surface, plus particulièrement d'une installation de peinture ou d'une installation de revêtement par pulvérisation, le composant comprenant lui-même un revêtement (4), sur la surface duquel se déposent librement, lors du fonctionnement de l'installation, des particules, **caractérisé en ce que** le revêtement (4) est conçu comme une couche sacrificielle, qui peut être éliminée par strates par le composant conjointement avec les particules, de façon à ce que plusieurs couches puissent être éliminées successivement sans qu'un nouveau revêtement doive avoir lieu entre-temps, la couche sacrificielle comprenant un mélange de calcaire, un liquide à base d'eau et un liant, de préférence un promoteur d'adhérence à base de résine artificielle.

2. Composant selon la revendication 1, **caractérisé en ce que** le composant est conçu comme un composant fixe d'une installation de revêtement de surface, plus particulièrement comme une plaque de mur, de plafond et/ou de sol, comme une voie de circulation, un recouvrement de lampe, un dispositif de convoyage, un canal d'admission et/ou d'évacuation d'air, un dispositif de levage ou d'abaissement, un robot de peinture, un échafaudage, une grille ou une trame de trous pour la disposition au-dessus d'une ouverture dans un mur, un plafond et/ou un sol dans une installation de peinture et/ou un dispositif d'application ou un dispositif d'entraînement ou autre.

3. Composant selon la revendication 1, **caractérisé en ce que** le composant est conçu comme un composant mobile lors du fonctionnement de l'installation de revêtement de surface, plus particulièrement comme un crochet de peinture, un boîtier, une enveloppe de protection, un chariot simple ou à claies ou un échafaudage d'appui ou mobile ou autres.

4. Composant selon l'une des revendications précédentes, **caractérisé en ce qu'**une élimination par strates de la couche sacrificielle a lieu par grattage, raclage, battage et/ou brossage.

5. Composant selon l'une des revendications précédentes, **caractérisé en ce que** la couche sacrificielle présente des propriétés friables et/ou une structure interne homogène.

6. Composant selon l'une des revendications précédentes, **caractérisé en ce que** la couche sacrificielle est réalisée comme une couche régulière sur l'ensemble de la surface du composant.

7. Procédé de fabrication d'une couche sacrificielle pour un composant d'une installation de revêtement de surface selon l'une des revendications 1 à 6, **caractérisé en ce que** le procédé comprend les étapes suivantes :
- fabrication d'un mélange pour la formation d'une couche sacrificielle ;
- revêtement du composant avec le mélange à partir d'une solution ;
- séchage du mélange pour la formation d'un revêtement avec une structure de préférence homogène.

8. Procédé selon la revendication 7, **caractérisé en ce que** la couche sacrificielle est formée au moyen d'une immersion u composant dans le mélange, par pulvérisation du mélange et/ou par application au pinceau du mélange sur le composant.

9. Procédé selon l'une des revendications 7 à 8, **caractérisé en ce que** le mélange pour la formation d'une couche sacrificielle comprend une calcaire, plus particulièrement du carbonate de calcium, de l'eau et un liant et/ou **en ce que**, entre la surface du composant et la couche sacrificielle, une couche intermédiaire de promoteur d'adhérence, plus particulièrement un composant de résine artificielle, est appliquée.

10. Procédé de nettoyage d'un composant avec une couche sacrificielle d'une installation de revêtement de surface, plus particulièrement d'une installation de peinture ou d'une installation de revêtement par pulvérisation selon l'une des revendications 1 à 6, **caractérisé en ce que** le procédé comprend les étapes suivantes :
- mise à disposition du composant contaminé avec des particules de peinture d'une installation de revêtement de surface au niveau d'un emplacement de nettoyage ;
- nettoyage du composant par une élimination par strates du revêtement conçu comme une couche sacrificielle et contaminé avec des particules de peinture, par grattage, raclage, battage et/ou brossage ;
- mise à disposition du composant nettoyé dans l'installation de revêtement de surface.
